# FASCICULE DE BREVET EUROPEEN

(11) **EP 4 508 412 B1**
(45) Date de publication et mention de la délivrance du brevet: **18.02.2026**
(21) Numéro de dépôt: 23725281.2
(22) Date de dépôt: 14.04.2023
(51) Int. Cl.: G01N 15/05, G01N 21/27

(54) **DISPOSITIF ET MÉTHODE DE NUMÉRATION DE FORMULE SANGUINE ET DE DÉTERMINATION DE VITESSE DE SÉDIMENTATION**
VORRICHTUNG UND VERFAHREN ZUR DURCHFÜHRUNG EINER VOLLBLUTZÄHLUNG UND BESTIMMUNG EINER SEDIMENTATIONSRATE
DEVICE AND METHOD FOR PERFORMING A FULL BLOOD COUNT AND DETERMINING A SEDIMENTATION RATE

(30) Priorité: 15.04.2022 FR 2203572
(43) Date de publication de la demande: 19.02.2025
(73) Titulaire: Horiba ABX SAS, 34184 Montpellier Cedex 4 (FR)
(72) Inventeur: PIEDCOQ, Philippe, 34184 MONTPELLIER Cedex (FR); COUDERC, Guilhem, 34184 MONTPELLIER Cedex (FR)
(74) Mandataire: Plasseraud IP
(86) Numéro de dépôt international: PCT/FR2023/050544
(87) Numéro de publication internationale: WO 2023/199008

(56) Documents cités:
- EP-A1- 2 921 862
- WO-A1-2021/097610
- IT-A1- UA20 163 693

## Description

L'invention concerne le domaine de l'hématologie, et plus particulièrement la détermination de la vitesse de sédimentation (ci-après VS, également appelée "erythrocyte sedimentation rate" ou "ESR" en anglais).

La vitesse de sédimentation fait partie des examens de routine avec la numération formule sanguine (ci-après NFS ou CBC pour "Complete Blood Count" en anglais) effectuée au cours d'un bilan sanguin et permet de détecter la présence de pathologies inflammatoires ou infectieuses. Par exemple un rhumatisme, un cancer et d'autres affections entraînant des changements de la concentration en protéines dans le sang. Une VS élevée indique un état inflammatoire sans préjuger de sa nature. Il arrive cependant que la VS reste basse alors qu'il y a un syndrome inflammatoire. Une VS élevée indique donc généralement la présence d'une pathologie. L'association de ce test non spécifique avec des examens complémentaires permet d'avoir un diagnostic plus précis.

La méthode de référence de la mesure de la VS est la méthode Westergren. Un tube étroit de dimensions normalisées est rempli d'un échantillon de sang prélevé avec un anticoagulant, par exemple de l'EDTA, et dilué au citrate de sodium et placé verticalement. La mesure de VS est la hauteur, en millimètres, de la colonne de plasma après une heure de sédimentation. Par exemple, il est considéré qu'une hauteur inférieure à 10 mm après la première heure de sédimentation est une valeur normale pour un adulte masculin. La limite de normalité n'est pas une valeur absolue mais dépend de l'âge et du sexe du patient.

La VS est la résultante de trois étapes : agrégation des hématies ou globules rouges, sédimentation, et tassement des rouleaux.

Le phénomène d'agrégation des hématies est produit en particulier par les protéines du sang avec une force d'autant plus grande que les concentrations de ces dernières sont élevées. La formation des agrégats est l'empilement des hématies en "rouleaux", puis en structures tridimensionnelles. La vitesse de sédimentation dépend des dimensions des agrégats et de la viscosité du plasma.

Pendant les dernières étapes, les agrégats vont sédimenter, c'est-à-dire qu'ils vont progressivement tomber au fond du tube, puis se compacter, ce qui va avoir pour effet de séparer le prélèvement en une portion translucide claire (plasma), en haut, et une portion beaucoup plus foncée (hématies) en bas. La VS est mesurée par la hauteur de la portion translucide.

Le paramètre inflammatoire le plus pertinent est le phénomène d'agrégation qui est directement dépendant des concentrations des protéines plasmatiques. C'est ce phénomène qui est mesuré par la présente invention pour retourner une valeur de VS. C'est également un paramètre non spécifique, mais qui supprime des interférences résultantes des deux dernières étapes de la VS. Il n'y a pas de paramètre normalisé permettant d'exprimer cette vitesse ou dynamique/cinétique d'agrégation. Il est donc pertinent de transposer des grandeurs de mesure d'agrégation en VS.

De par la quantité de sang (1,6 ml) et la durée nécessaire à sa réalisation (1 heure), la méthode Westergren n'est pas compatible avec les automates d'hématologie pour l'analyse CBC. Pour contourner ces problèmes, des recherches ont été menées afin d'utiliser des mesures optiques d'extinction (absorption et diffusion) pour déterminer la vitesse de sédimentation, comme dans le brevet US 6 632 679.

Certains brevets, comme décrit dans EP 2 921 862 ont proposé d'intégrer une mesure de VS modifiée dans un appareil de test sanguin qui prélève une quantité de sang et la sépare en deux portions qui font respectivement l'objet d'un comptage (NFS) et d'une mesure de vitesse de sédimentation.

Cet appareil lie donc la mesure de comptage et celle de mesure de vitesse de sédimentation, ce qui est désavantageux car nécessite un appareillage complexe pour distribuer via un unique prélèvement, deux portions d'échantillons de sang vers la section de comptage d'un côté et vers la section de mesure de vitesse de sédimentation d'un autre, d'autant plus que les opérations CBC et de mesure de VS ne présentent pas les mêmes besoins en termes de préparation de l'échantillon.

Le document ITUA20163693A1 décrit un appareil permettant d'effectuer des analyses hématologiques sur des échantillons de sang et permettant d'intégrer la détection de la vitesse de sédimentation du sang (VS) à la détection d'autres paramètres chimiques et physiques du sang.

Le document WO 2021/097610 A1 décrit un analyseur d'échantillons comprenant un module de mesure de la vitesse de sédimentation des érythrocytes, un module de mesure de l'hémogramme et un module d'attribution d'échantillons. Le module d'attribution d'échantillons est utilisé pour collecter un échantillon de sang, attribuer une première partie de l'échantillon de sang au module de mesure de la vitesse de sédimentation des érythrocytes et d'attribuer une deuxième partie de l'échantillon sanguin au module de mesure de la numération sanguine complète. Le module de mesure de la vitesse de sédimentation des érythrocytes comprend un tube de mesure et un appareil de mesure optique.

Aucun dispositif connu ne permet de réaliser une numération de formule sanguine et une détermination de la mesure de vitesse de sédimentation de manière rapide, découplée l'une de l'autre et avec une architecture simple.

L'invention vient améliorer la situation. À cet effet, elle propose un dispositif de numération de formule sanguine et de détermination de vitesse de sédimentation qui comprend un premier groupe agencé pour prélever un échantillon sanguin dans un tube et pour réaliser une numération de formule sanguine sur cet échantillon, et un deuxième groupe agencé pour prélever un échantillon sanguin dans un tube et pour réaliser une détermination de vitesse de sédimentation. Le dispositif comprend au moins un organe de prélèvement pouvant être commandé pour une mesure par le premier groupe et une mesure par le deuxième groupe pour le prélèvement d'un échantillon sanguin de sorte qu'un échantillon prélevé pour le premier groupe n'est pas utilisé par le deuxième groupe, et qu'un échantillon prélevé pour le deuxième groupe n'est pas utilisé par le premier groupe, le deuxième groupe étant muni d'un capteur comprenant une source de lumière à infrarouge et un capteur optique disposés sensiblement en regard l'un de l'autre autour d'un tube relié à une extrémité de sortie de l'au moins un organe de prélèvement de sorte que la lumière émise par la source de lumière infrarouge atteint le capteur optique après avoir traversé ledit tube. Le deuxième groupe est en outre agencé pour réaliser un rinçage de l'organe de prélèvement et du tube entre deux déterminations de mesures de vitesse de sédimentation et le capteur optique est agencé pour réaliser une mesure de blanc après une opération de rinçage. Le dispositif comprend en outre un convertisseur agencé pour recevoir une mesure de blanc et une ou plusieurs mesures de transmission lumineuse du capteur optique et pour déterminer une vitesse de sédimentation à partir du rapport entre la mesure de blanc et la ou les plusieurs mesures de transmission lumineuse.

Ce dispositif est particulièrement avantageux car il permet de réaliser la mesure de vitesse de sédimentation indépendamment de la numération de formule sanguine. Ainsi, la mesure de vitesse de sédimentation, qui reste un test moins systématique, ne vient pas interférer avec l'architecture du dispositif d'une manière susceptible de pénaliser les autres fonctionnalités.

Selon divers modes de réalisation, l'invention peut présenter une ou plusieurs des caractéristiques suivantes :
- la source de lumière à infrarouge et le capteur optique sont disposés à une distance de l'extrémité de prélèvement de l'organe de prélèvement inférieure à 10cm,
- le deuxième groupe est disposé à une entrée du dispositif en amont du premier groupe, ou en sortie du dispositif pour la réalisation de mesures complémentaires de type étalement ou coloration en aval du premier groupe,
- le convertisseur est agencé pour déterminer un instant de mesure de transmission lumineuse la plus basse, et un instant de mesure de transmission lumineuse final
- le capteur optique est agencé pour mettre en œuvre un gain maximal entre l'instant de mesure de transmission lumineuse la plus basse et l'instant de mesure de transmission lumineuse final, et pour mettre en œuvre un gain minimal le reste du temps,
- le convertisseur est agencé pour calculer la vitesse de sédimentation à partir du ratio entre d'une part le rapport entre la mesure de blanc et la mesure à l'instant de mesure de transmission final, et d'autre part le rapport entre la mesure de blanc et la mesure à l'instant de mesure de transmission lumineuse de transmission lumineuse la plus basse,
- le capteur optique est commandé avec un gain faible avant que du sang passe dans la portion sensiblement transparente, et avec un gain fort après, et
- l'organe de prélèvement est une aiguille pouvant être commandée pour le prélèvement d'un échantillon sanguin à laquelle est relié un tube dans lequel est réalisée la portion sensiblement transparente.

L'invention concerne également un procédé de numération de formule sanguine et de détermination de vitesse de sédimentation qui comprend l'utilisation d'un dispositif selon l'invention, la réalisation d'une numération de formule sanguine d'une part et la détermination d'une vitesse de sédimentation d'autre part comprenant le prélèvement de deux échantillons distincts.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique générale d'un dispositif selon l'invention,
- la figure 2 représente un détail de réalisation d'un élément de la figure 1,
- la figure 3 représente un diagramme de mesure par le dispositif de la figure 1,
- la figure 4 représente une vue schématique d'un premier mode de réalisation du dispositif de la figure 1, et
- la figure 5 représente une vue schématique d'un deuxième mode de réalisation du dispositif de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

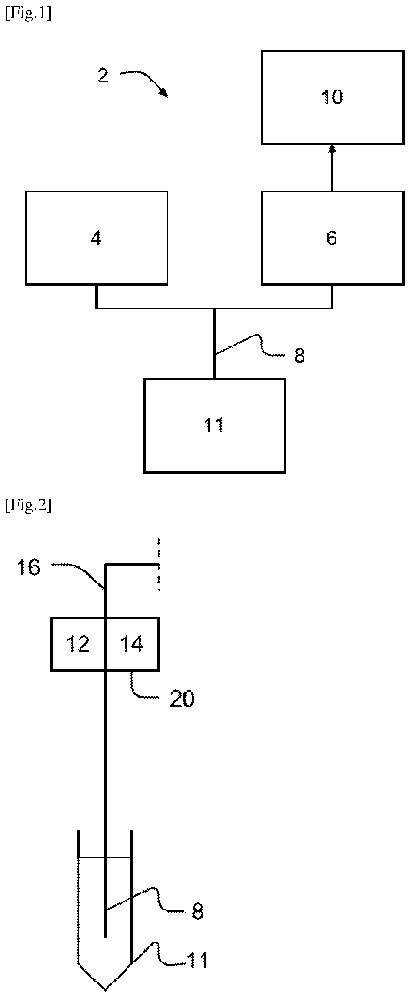

La figure 1 représente une vue schématique générale d'un dispositif 2 de numération de formule sanguine et de détermination de la mesure de vitesse de sédimentation selon l'invention. Le dispositif 2 comprend un premier groupe 4, un deuxième groupe 6, un organe de prélèvement 8 et un convertisseur 10.

Le premier groupe 4 est agencé pour prélever un échantillon sanguin dans un tube et pour réaliser principalement une numération de formule sanguine sur cet échantillon. Cette mesure peut être réalisée de manière classique et connue par ailleurs. De nombreux appareils d'hématologie sont spécialisés dans la réalisation de cette mesure. D'autres types d'analyses sanguines que des CBC peuvent être réalisées au sein du groupe 4, telles que des mesures d'hémoglobine glyquée (HbA1c), Protéine C-réactive (CRP), etc...

Le deuxième groupe 6 est agencé pour déterminer une mesure de VS. C'est ce deuxième groupe qui fait l'objet principal de l'invention. En effet, comme décrit en introduction, ce test, qu'il soit réalisé selon la méthode classique ou par mesure de changement de l'absorbance lumineuse, est soit fastidieux, soit couplé à une mesure CBC, qui ralentit l'ensemble du dispositif.

La mise en œuvre du deuxième groupe 6 selon l'invention permet d'extrapoler une mesure de vitesse de sédimentation par changement de l'absorbance lumineuse d'une manière découplée de toute mesure CBC ou autres mesures sanguines. Pour cela, le deuxième groupe 6 est agencé pour commander l'organe de prélèvement 8 qui est ici une aiguille indépendamment du premier groupe 4, c'est-à-dire que les échantillons prélevés par le premier groupe 4 ne sont utilisés que pour une mesure CBC ou autres mesures sanguines, et les échantillons prélevés par le deuxième groupe 6 ne sont utilisés que pour une mesure ESR.

Ainsi, comme on peut le voir sur la figure 1, le premier groupe 4 ou le deuxième groupe 6 commande l'aiguille 8 pour prélever un échantillon sanguin dans un tube de sang 11. Ensuite, cet échantillon est amené au premier groupe 4 pour réaliser une mesure CBC ou autres mesures sanguines, ou au deuxième groupe 6 pour réaliser une mesure de changement de l'absorbance lumineuse. Dans ce dernier cas, la mesure est transmise au convertisseur 10 qui retourne un signal ESR et/ou une valeur de mesure de VS.

La figure 2 représente un exemple de réalisation du deuxième groupe de mesure 6. Selon cet exemple, le deuxième groupe de mesure 6 est réalisé au moyen d'une source optique 12 et d'un capteur optique 14 qui sont assemblés en regard l'un de l'autre autour d'un tube 16 qui sert à transporter l'échantillon de sang prélevé par l'aiguille 8 depuis un tube de sang 11 vers l'intérieur du dispositif 2.

Dans l'exemple décrit ici, la source lumineuse 12 est de type LED à longueur d'onde infrarouge de manière préférée dans la plage 700-980 nm et en particulier 800 nm, qui est un point isobestique entre l'oxyhémoglobine et la désoxyhémoglobine ce qui rend la mesure insensible au niveau de la saturation du sang en oxygène. Dans l'exemple décrit ici, le capteur optique 14 est de type photodiode et peut être choisi parmi les capteurs PMT, PDA, CMOS, etc... Dans l'exemple décrit ici, le tube 16 est en téflon et est raccordé à l'aiguille 8. En variante, le tube 16 peut être en verre ou plastique et doit être choisi de manière à offrir une bonne transparence à la longueur d'onde de la source lumineuse 12.

L'ensemble source lumineuse 12 et capteur optique 14 peut être vu comme un unique capteur 20 du deuxième groupe 6. Comme dans l'exemple décrit ici, il peut être en deux parties qui s'assemblent pour enserrer l'aiguille 8 (par exemple métallique) et le tube 16. En variante, la source lumineuse 12 et le capteur optique 14 peuvent être réalisés d'un seul tenant. De manière préférée, le capteur 20 est disposé assez proche de l'extrémité de l'aiguille 8, à moins de 10cm de celle-ci, afin d'optimiser le cisaillement des globules rouges. De manière préférée, cette distance est d'environ 5cm pour obtenir les meilleurs résultats. Dans une variante le capteur 20 peut être placé directement en sortie de l'aiguille 8.

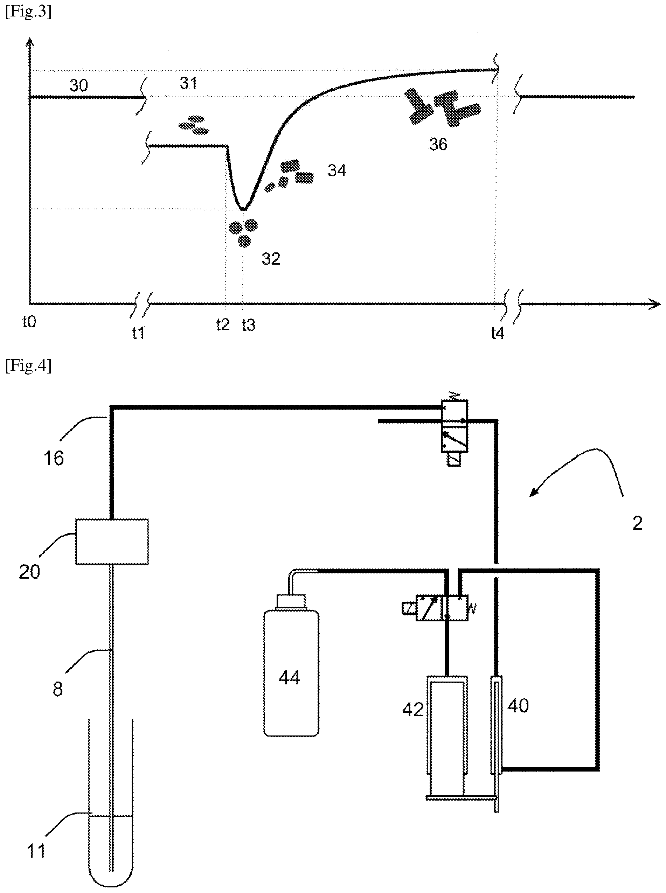

Quelle que soit la configuration, le deuxième groupe 6 permet d'utiliser de manière avantageuse le diamètre de l'aiguille 8 qui est classiquement de l'ordre de 1mm. En effet, lors d'un prélèvement par l'aiguille 8, les globules rouges subissent des déformations successives qui sont décrites ci-après et qui sont représentées sur la figure 3.

Ainsi, une fois l'aiguille 8 plongée dans le tube de sang 11, le deuxième groupe 6 commande une aspiration par l'aiguille 8 déjà amorcée en diluant afin de prélever du sang. Cela est réalisé grâce à des moyens de contrôle d'automatisme, de bacs de préparation et d'électrovannes et seringues connus par ailleurs et non représentés pour des raisons de simplification. Ces moyens entraînent le déplacement du diluant qui occupe le tube 16. A cette étape, du fait de la nature translucide du tube 16 et du diluant qu'il contient, le capteur 20 mesure un signal optique constant.

Ensuite, l'aliquote de sang est déplacée jusqu'au capteur 20 par aspiration. Les globules rouges subissent un cisaillement, ce qui casse l'agrégation. À cette étape, le signal optique reste maximal puisque le sang n'est pas encore en regard du capteur 20. Sur la figure 3, cela est représenté avec la référence 30.

Lorsque le sang arrive dans le capteur, le signal optique représente l'état cisaillé du sang. À ce stade de cisaillement du sang, les hématies ont une forme allongée, comme visible avec la référence 31.

Lorsque l'aspiration s'arrête afin de stopper le cisaillement, le signal de transmission optique baisse du fait que les globules rouges reprennent leur forme relaxée de disque biconcave. Sur la figure 3, cela est représenté avec la référence 32. Ensuite, le signal optique augmente suivant une progression pseudo logarithmique. L'augmentation progressive du signal optique mesurée par le capteur optique 14 est liée à l'agrégation progressive des globules rouges libres. L'agrégation se fait par l'empilement des globules rouges formant des rouleaux puis des structures en trois dimensions ce qui est représenté sur la figure 3 avec les références 34 et 36.

Au-delà d'environ 40s selon les sangs, l'agrégation est fortement ralentie et la sédimentation commence. Ce début de sédimentation interfère sur la mesure d'intérêt qui est l'agrégation et de sa corrélation avec la vitesse de sédimentation. Après t4 l'aliquote de sang est évacuée, par exemple par déplacement de l'aiguille 8 au-dessus d'un bac. On procède ainsi à l'évacuation du sang et au rinçage du tube 16 avec du diluant, le tube 16 se trouvant à la fin de cette étape entièrement rempli de diluant comme au début de la procédure décrite plus haut.

Quatre instants sont représentés sur la figure 3 :
- avant l'instant t1, le tube 16 est rempli de diluant,
- l'instant t1 marque l'instant auquel le sang arrive au niveau du capteur 20 par aspiration,
- l'instant t2 marque l'instant auquel l'aspiration cesse,
- l'instant t3 marque l'instant à partir duquel les globules rouges ont repris leur forme relaxée, et l'agrégation commence,
- l'instant t4 marque l'instant de fin de la procédure, avec l'évacuation du sang qui est à nouveau remplacé par du diluant, comme avant l'instant t1.

L'observation de la figure 3 montre que le signal optique est moins important après l'instant t4, alors que le tube 16 est rempli de diluant, que lorsque le tube 16 est rempli de sang, ce qui peut paraître paradoxal. Cela s'explique par le fait que dans l'exemple décrit ici le capteur optique 14 est conditionné de manière différente avant l'instant t1 et après l'instant t4 de la figure 3.

Ainsi, avant l'instant t1 et après l'instant t4, il est déterminé que la mesure correspond à une mesure de "blanc". Pour toute cette période, le capteur optique 14 est conditionné par le convertisseur 10 avec un gain de mesure minimal.

L'instant t3 correspond au point le plus bas de la période t1-t4, à partir duquel le signal optique devient croissant, ce qui marque, comme décrit plus haut, le début du phénomène que l'invention vise à mesurer. Pour cette raison, et comme la variation du signal optique reste faible entre l'instant t0 et l'instant t1, dans l'exemple décrit ici, le capteur optique 14 est conditionné avec un gain minimal jusqu' à l'instant t1, puis avec un gain maximal entre l'instant t1 et t4, puis à nouveau avec un gain minimal après l'instant t4 pour la mesure suivante.

Cela est d'autant plus avantageux que, dans le mode de réalisation décrit ici, le convertisseur 10 est agencé pour déterminer une mesure basée sur la densité optique du signal mesuré par le capteur optique 14. Pour rappel, la densité optique est définie par la formule *DO*(*t*) *= log*(*KI0*/*I*(*t*)) où I(t) est la mesure du capteur optique à l'instant t et K le rapport gain maxi/gain mini. Plus précisément, le convertisseur 10 est agencé pour retourner une mesure de vitesse de sédimentation basée sur le rapport DO(t3)/DO(t4). La Demanderesse a réalisé de nombreuses mesures de vitesse de sédimentation en utilisant la méthode de référence Westergren qui permettent au convertisseur 10 d'associer les mesures ainsi calculées à une valeur de VS.

La Demanderesse a découvert qu'il est particulièrement avantageux d'utiliser la densité optique, qui permet de ne pas dépendre d'éventuelles variations dans la mesure de transmittance. La Demanderesse a également découvert que le convertisseur 10 peut aussi fonctionner à partir du rapport I(t₄)/I(t₃), sans passer par la densité optique au sens de Beer-Lambert et en utilisant I0 différemment dans le calcul.

Le convertisseur 10 peut être réalisé de diverses manières, par exemple sous la forme d'un code informatique approprié exécuté sur un ou plusieurs processeurs. Par processeurs, il doit être compris tout processeur adapté aux calculs décrits plus bas. Un tel processeur peut être réalisé de toute manière connue, sous la forme d'un microprocesseur pour ordinateur personnel, portable, tablette ou smartphone, d'une puce dédiée de type FPGA ou SoC, d'une ressource de calcul sur une grille ou dans le cloud, d'une grappe de processeurs graphiques (GPUs), d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. Dans le cas de l'unité d'apprentissage automatique basé sur renforcement du gradient, des processeurs dédiés à l'apprentissage automatique pourront aussi être envisagés. En variante, le convertisseur 10 peut être un calculateur analogique sans programmation ou code informatique à proprement parler.

Toujours en variante, le convertisseur 10 pourrait utiliser un algorithme d'apprentissage automatique ("machine learning" en anglais), impliquant ou non un réseau de neurones (profond ou pas). Il s'agit d'associer les mesures d'intensité du capteur optique 14 avec une valeur de vitesse de sédimentation. Cette variante peut être particulièrement utile pour se passer de la densité optique. Toujours en variante, le gain du capteur optique 14 pourrait être le même pour tous les instants de la mesure.

La figure 4 représente une vue schématique d'un mode de réalisation du dispositif de la figure 1. Comme on peut le voir sur cette figure, le dispositif 2 est un appareil d'hématologie classique comprenant une seringue 40 de diamètre 1,5mm, et une seringue 42 de diamètre 16mm qui sont toutes deux reliées à l'aiguille 8. Le capteur 20 a été intégré sur l'aiguille 8, de sorte qu'il recouvre l'extrémité du tube 16 reliée à l'aiguille 8.

Le dispositif 2 de la figure 4 est adapté à réaliser une mesure CBC, une mesure ESR ou les deux.

Pour la mesure CBC, l'ensemble du circuit est amorcé en diluant, puis l'aiguille 8 percute le tube de sang 11 et prélève 10 µl avec la seringue 40. L'aiguille 8 est ensuite remontée et placée au-dessus du bac de préparation, puis l'extérieur de celle-ci est rincé dans ce bac, avec évacuation aux déchets. Enfin un mélange de l'échantillon de 10 µL avec 1 mL de diluant (par exemple) est distribué immédiatement après prélèvement dans le bac de préparation avec la seringue 42. Cette première dilution sera ensuite utilisée dans les différentes préparations pour réaliser la mesure CBC. De manière avantageuse, une fois l'aliquote de sang évacuée dans le bac de préparation, le rinçage intérieur et extérieur de l'aiguille 8 peut être réalisé.

Pour la mesure ESR, il est procédé comme décrit plus haut en référence aux figures 1 à 3. L'ensemble du circuit est amorcé en diluant tiré d'un réservoir 44, puis une bulle d'air de quelques µL est créée en bout de l'aiguille 8. L'aiguille 8 est descendue dans le tube de sang 11 et une aliquote de 50 µL à 100 µL est prélevée par la seringue 42. L'aiguille 8 est remontée, et l'aliquote transférée au capteur 20 et la mesure optique de l'agrégation est réalisée. Enfin, le rinçage intérieur et extérieur de l'aiguille 8 dans un bac est réalisé, avec évacuation aux déchets. La mesure de blanc (I0) peut être effectuée avant le prélèvement ou en fin de rinçage. La comparaison optionnelle des mesures de blanc avant et après permettent une gestion d'exception, par exemple un contrôle du rinçage.

Les cycles CBC et ESR sont réalisés indépendamment l'un de l'autre, et font en particulier l'objet d'un prélèvement par l'aiguille 8 séparé : l'aliquote pour la mesure CBC ne peut pas être utilisée pour la mesure ESR et inversement.

Un mélange de l'échantillon de 10 µL avec 1 mL de diluant (par exemple) est distribué immédiatement après prélèvement dans le bac de préparation avec la seringue 42. Cette première dilution sera ensuite utilisée dans les différentes préparations pour réaliser la mesure CBC.

Cela permet de découpler les deux mesures sans prélèvement problématique de sang lorsque les deux mesures sont demandées. Cette indépendance rend la mesure ESR beaucoup moins gênante pour la cadence du dispositif 2 et permet une intégration à moindre coût, tant matériel qu'humain.

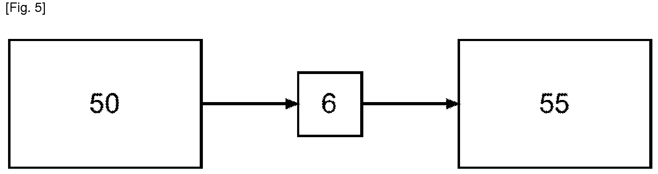

La figure 5 représente une vue schématique d'un autre mode de réalisation du dispositif de la figure 1. Comme on peut le voir sur cette figure, le dispositif 2 est cette fois adapté à une chaîne de mesure de laboratoire automatisée de type TLA ("Total Laboratory Automation" en anglais).

Le matériel impérativement nécessaire pour alimenter en échantillon la cellule de mesure du dispositif 2 est de loin la partie la plus couteuse et complexe : interconnexion à la chaîne de TLA, gestion de portoirs (racks) de tubes, agitation des tubes, gestion des tubes, prélèvement et transfert dans la cellule de mesure, rinçage du dispositif de prélèvement et dispositifs de contrôle et de transmission des résultats.

La Demanderesse a découvert que dans cette configuration, il est avantageux d'intégrer un deuxième groupe 6 dans un module séparé du module CBC principal 50 et relié à celui-ci. Par exemple, le deuxième groupe 6 peut être intégré à l'aiguille de prélèvement du groupe 4 d'un module d'étalement ou de coloration 55. Ainsi, ce module verra son taux d'utilisation augmenter, et la cadence du TLA ne sera pas affectée puisque les mesures d'ESR seront ici encore réalisées de manière totalement indépendante des mesures CBC pour un tube de sang donné.

Cela est beaucoup plus efficace que tous les systèmes connus, qui proposent soit un module spécifique pour la mesure de la vitesse de sédimentation, en plus du module d'étalement ou de coloration, ou de ponctionner du temps de traitement CBC/DIF/RET sur un module généraliste.

En variante, le deuxième groupe 6 peut être intégré sur l'aiguille de prélèvement d'un dispositif haut de gamme qui comprend un module de prélèvement spécifique pour des mesures ultérieures d'étalement ou de coloration.

L'invention permet donc d'intégrer de manière efficace la mesure de vitesse de sédimentation aux dispositifs existants, sans impacter leurs cadences de travail ou leur architecture.

## Revendications

1. Dispositif de numération de formule sanguine et de détermination de vitesse de sédimentation, comprenant un premier groupe (4) agencé pour prélever un échantillon sanguin dans un tube et pour réaliser une numération de formule sanguine sur cet échantillon, comprenant un deuxième groupe (6) agencé pour prélever un échantillon sanguin dans un tube et pour réaliser une détermination de vitesse de sédimentation, le dispositif comprenant au moins un organe de prélèvement (8) pouvant être commandé pour une mesure par le premier groupe (4) et une mesure par le deuxième groupe (6) pour le prélèvement d'un échantillon sanguin de sorte qu'un échantillon prélevé pour le premier groupe (4) n'est pas utilisé par le deuxième groupe (6), et qu'un échantillon prélevé pour le deuxième groupe (6) n'est pas utilisé par le premier groupe (4), le deuxième groupe (6) étant muni d'un capteur (20) comprenant une source de lumière à infrarouge (12) et un capteur optique (14) disposés sensiblement en regard l'un de l'autre autour d'un tube (16) relié à une extrémité de sortie de l'au moins un organe de prélèvement (8) de sorte que la lumière émise par la source de lumière infrarouge (12) atteint le capteur optique (14) après avoir traversé ledit tube (16), le deuxième groupe (6) étant en outre agencé pour réaliser un rinçage de l'organe de prélèvement (8) et du tube (16) entre deux déterminations de mesures de vitesse de sédimentation **caracterisé en ce que** le capteur optique (14) est agencé pour réaliser une mesure de blanc après une opération de rinçage, le dispositif comprenant en outre un convertisseur (10) agencé pour recevoir une mesure de blanc et une ou plusieurs mesures de transmission lumineuse du capteur optique (14) et pour déterminer une vitesse de sédimentation à partir du rapport entre la mesure de blanc et la ou les plusieurs mesures de transmission lumineuse.

2. Dispositif selon la revendication 1, dans lequel le deuxième groupe (6) est disposé à une entrée du dispositif (2) en amont du premier groupe (4), ou en sortie du dispositif (2) pour la réalisation de mesures complémentaires de type étalement ou coloration en aval du premier groupe (4).

3. Dispositif selon l'une des revendications précédentes, dans lequel le convertisseur (10) est agencé pour déterminer un instant de mesure de transmission lumineuse la plus basse (t3), et un instant de mesure de transmission lumineuse final (t4).

4. Dispositif selon la revendication 3, dans lequel le capteur optique (14) est agencé pour mettre en œuvre un gain maximal entre l'instant de mesure de transmission lumineuse la plus basse (t3) et l'instant de mesure de transmission lumineuse final (t4), et pour mettre en œuvre un gain minimal le reste du temps.

5. Dispositif selon la revendication 3 ou 4, dans lequel le convertisseur (10) est agencé pour calculer la vitesse de sédimentation à partir du ratio entre d'une part le rapport entre la mesure de blanc et la mesure à l'instant de mesure de transmission final (t4), et d'autre part le rapport entre la mesure de blanc et la mesure à l'instant de mesure de transmission lumineuse de transmission lumineuse la plus basse (t3).

6. Dispositif selon l'une des revendications précédentes, dans lequel le capteur optique (14) est commandé avec un gain faible avant que du sang passe dans la portion sensiblement transparente, et avec un gain fort après.

7. Dispositif selon l'une des revendications précédentes, dans lequel l'organe de prélèvement est une aiguille (8) pouvant être commandée pour le prélèvement d'un échantillon sanguin à laquelle est relié un tube (16) dans lequel est réalisée la portion sensiblement transparente (16).

8. Procédé de numération de formule sanguine et de détermination de vitesse de sédimentation **caractérisé en ce qu'**il comprend l'utilisation d'un dispositif selon l'une des revendications 1 à 7, et **en ce que** la réalisation d'une numération de formule sanguine d'une part et la détermination d'une vitesse de sédimentation d'autre part comprennent le prélèvement de deux échantillons distincts.

## Patentansprüche

1. Vorrichtung zur Blutbildbestimmung und zur Bestimmung der Sedimentationsgeschwindigkeit, umfassend eine erste Gruppe (4), die dazu angeordnet ist, eine Blutprobe aus einem Röhrchen zu entnehmen und eine Blutbildbestimmung an dieser Probe durchzuführen, umfassend eine zweite Gruppe (6), die dazu angeordnet ist, eine Blutprobe aus einem Röhrchen zu entnehmen und eine Bestimmung der Sedimentationsgeschwindigkeit durchzuführen, wobei die Vorrichtung mindestens ein Entnahmeelement (8) umfasst, das für eine Messung durch die erste Gruppe (4) und eine Messung durch die zweite Gruppe (6) zur Entnahme einer Blutprobe so gesteuert werden kann, dass eine für die erste Gruppe (4) entnommene Probe nicht von der zweiten Gruppe verwendet wird und eine für die zweite Gruppe (6) entnommene Probe nicht von der ersten Gruppe (4) verwendet wird, wobei die zweite Gruppe (6) mit einem Sensor (20) ausgestattet ist, der eine Infrarotlichtquelle (12) und einen optischen Sensor (14) umfasst, die im Wesentlichen einander gegenüberliegend um ein Rohr (16) angeordnet sind, das mit einem Auslassende des mindestens einen Entnahmeelements (8) verbunden ist, sodass das von der Infrarotlichtquelle (12) emittierte Licht den optischen Sensor (14) erreicht, nachdem es das Rohr (16) durchlaufen hat, wobei die zweite Gruppe (6) ferner dazu angeordnet ist, zwischen zwei Bestimmungen der Sedimentationsgeschwindigkeit eine Spülung des Entnahmeelements (8) und des Rohrs (16) durchzuführen,
**dadurch gekennzeichnet, dass** der optische Sensor (14) dazu angeordnet ist, nach einem Spülvorgang eine Blindwertmessung durchzuführen, wobei die Vorrichtung ferner einen Wandler (10) umfasst, der dazu angeordnet ist, eine Blindwertmessung und eine oder mehrere Lichtdurchlässigkeitsmessungen des optischen Sensors (14) zu empfangen und anhand des Verhältnisses zwischen der Blindwertmessung und der oder den mehreren Lichtdurchlässigkeitsmessungen eine Sedimentationsgeschwindigkeit zu bestimmen.

2. Vorrichtung nach Anspruch 1, wobei die zweite Gruppe (6) an einem Einlass der Vorrichtung (2) stromaufwärts der ersten Gruppe (4) oder am Auslass der Vorrichtung (2) angeordnet ist, um zusätzliche Messungen vom Typ Ausbreitung oder Färbung stromabwärts der ersten Gruppe (4) durchzuführen.

3. Vorrichtung nach einem der vorstehenden Ansprüche, wobei der Wandler (10) dazu angeordnet ist, einen Zeitpunkt der niedrigsten Lichtdurchlässigkeitsmessung (t3) und einen Zeitpunkt der endgültigen Lichtdurchlässigkeitsmessung (t4) zu bestimmen.

4. Vorrichtung nach Anspruch 3, wobei der optische Sensor (14) dazu angeordnet ist, zwischen dem Zeitpunkt der Messung der niedrigsten Lichtdurchlässigkeit (t3) und dem Zeitpunkt der Messung der endgültigen Lichtdurchlässigkeit (t4) eine maximale Verstärkung zu erzielen und während der restlichen Zeit eine minimale Verstärkung zu erzielen.

5. Vorrichtung nach Anspruch 3 oder 4, wobei der Wandler (10) dazu angeordnet ist, die Sedimentationsgeschwindigkeit aus dem Verhältnis zwischen einerseits der Bezeihung zwischen der Blindwertmessung und der Messung zum Zeitpunkt der endgültigen Transmission (t4) und andererseits der Beziehung zwischen der Blindwertmessung und der Messung zum Zeitpunkt der niedrigsten Lichtdurchlässigkeitsmessung (t3) zu berechnen.

6. Vorrichtung nach einem der vorstehenden Ansprüche, wobei der optische Sensor (14) mit einer geringen Verstärkung gesteuert wird, bevor Blut durch den im Wesentlichen transparenten Abschnitt fließt, und danach mit einer starken Verstärkung gesteuert wird.

7. Vorrichtung nach einem der vorstehenden Ansprüche, wobei das Entnahmeelement eine zur Entnahme einer Blutprobe steuerbare Nadel (8) ist, mit der ein Schlauch (16) verbunden ist, in dem der im Wesentlichen transparente Abschnitt (16) ausgebildet ist.

8. Verfahren zur Blutbildbestimmung und zur Bestimmung der Sedimentationsgeschwindigkeit, **dadurch gekennzeichnet, dass** es die Verwendung einer Vorrichtung gemäß einem der Ansprüche 1 bis 7 umfasst und dass die Durchführung einer Blutbildbestimmung einerseits und die Bestimmung einer Sedimentationsgeschwindigkeit andererseits die Entnahme von zwei getrennten Proben umfasst.

## Claims

1. A device for performing a complete blood count and determining a sedimentation rate, comprising a first group (4) arranged to sample a blood sample from a tube and to carry out a complete blood count on this sample, comprising a second group (6) arranged to sample a blood sample from a tube and to carry out a sedimentation rate determination, the device comprising at least one sampling member (8) which can be controlled for a measurement by the first group (4) and a measurement by the second group (6) for sampling a blood sample so that a sample sampled for the first group (4) is not used by the second group (6), and that a sample sampled for the second group (6) is not used by the first group (4), the second group (6) being provided with a sensor (20) comprising an infrared light source (12) and an optical sensor (14) arranged substantially opposite one another around a tube (16) connected to an output end of the at least one sampling member (8) so that the light emitted by the infrared light source (12) reaches the optical sensor (14) after having crossed said tube (16), the second group (6) being further arranged to carry out a rinsing of the sampling member (8) and of the tube (16) between two sedimentation rate measurement determinations, **characterised in that** the optical sensor (14) is arranged to carry out a blank measurement after a rinsing operation, the device further comprising a converter (10) arranged to receive a blank measurement and one or more light transmission measurement(s) from the optical sensor (14) and to determine a sedimentation rate from the ratio between the blank measurement and the light transmission measurement(s).

2. The device according to claim 1, wherein the second group (6) is arranged at an inlet of the device (2) upstream of the first group (4), or at the outlet of the device (2) for carrying out spreading or colouring type complementary measurements downstream of the first group (4).

3. The device according to one of the preceding claims, wherein the converter (10) is arranged to determine a time point of measurement of the lowest light transmission (t3), and a time point of measurement of the final light transmission (t4).

4. The device according to claim 3, wherein the optical sensor (14) is arranged to implement a maximum gain between the time point of measurement of the lowest light transmission (t3) and the time point of measurement of the final light transmission (t4), and to implement a minimum gain the rest of the time.

5. The device according to claim 3 or 4, wherein the converter (10) is arranged to calculate the sedimentation rate from the ratio between on the one hand the ratio between the blank measurement and the measurement at the time point of measurement of the final light transmission (t4) and, on the other hand, the ratio between the blank measurement and the measurement at the time point of measurement of the lowest light transmission (t3).

6. The device according to one of the preceding claims, wherein the optical sensor (14) is controlled with a low gain before blood passes through the substantially transparent portion, and with a high gain afterwards.

7. The device according to one of the preceding claims, wherein the sampling member is a needle (8) which can be controlled for sampling of a blood sample to which a tube (16) is connected in which the substantially transparent portion (16) is formed.

8. A method for performing a complete blood count and determining a sedimentation rate **characterised in that** it comprises using a device according to one of claims 1 to 7, and **in that** carrying out a complete blood count on the one hand and determining a sedimentation rate on the other hand comprise sampling two distinct samples.
